(19) Europäisches Patentamt / European Patent Office / Office européen des brevets

(11) **EP 3 482 386 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(51) Int Cl.:
*G09B 23/28* *(2006.01)*   *A63H 3/36* *(2006.01)*
*A63H 13/00* *(2006.01)*

(21) Anmeldenummer: **17739176.0**

(22) Anmeldetag: **28.06.2017**

(86) Internationale Anmeldenummer:
**PCT/AT2017/000053**

(87) Internationale Veröffentlichungsnummer:
**WO 2018/006107 (11.01.2018 Gazette 2018/02)**

(54) **PATIENTENSIMULATOR**

PATIENT SIMULATOR

SIMULATEUR DE PATIENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.07.2016 AT 3172016**

(43) Veröffentlichungstag der Anmeldung:
**15.05.2019 Patentblatt 2019/20**

(73) Patentinhaber: **SIMCharacters GmbH**
**1050 Wien (AT)**

(72) Erfinder:
• **SCHWINDT, Jens Christian**
**3021 Pressbaum (AT)**
• **UNGER, Ewald**
**1210 Wien (AT)**
• **HALLER, Michael**
**1040 Wien (AT)**
• **NEPOMUCKY, Tanja**
**1170 Wien (AT)**
• **SCHMOLL, Martin**
**1230 Wien (AT)**

(74) Vertreter: **Keschmann, Marc**
**Haffner und Keschmann Patentanwälte GmbH**
**Schottengasse 3a**
**1010 Wien (AT)**

(56) Entgegenhaltungen:
EP-A2- 1 687 790    WO-A1-2016/030393
FR-A- 519 188       FR-A1- 2 965 089
US-A- 3 520 071     US-A- 4 850 876
US-A- 5 584 701     US-A1- 2008 138 779
US-A1- 2010 279 262  US-A1- 2014 302 473

**Beschreibung**

Die Erfindung betrifft einen Patientensimulator, insbesondere Frühgeborenen-, Neugeborenen- oder Kindersimulator, umfassend eine Nachbildung wenigstens eines Körperteils eines menschlichen Patienten.

Da die Versorgung eines kritisch kranken Früh- oder Neugeborenen ein relativ seltenes Ereignis ist, bedarf sie eines schnellen, überlegten und strukturierten Handelns des medizinischen Personals, weshalb es immer wieder zu Problemen in der Umsetzung der medizinischen Handlungen und der Zusammenarbeit im Team kommt. Werden bei der Versorgung eines lebensbedrohten Früh- oder Neugeborenen nicht die richtigen Maßnahmen getroffen, kann dies einen lebenslangen Einfluss auf die weitere Entwicklung des Kindes haben. Gerade in der Kinderheilkunde ist daher die Durchführung von Simulationstrainings eine ethische Verpflichtung. Nur so können die notwendigen Erfahrungen und Fertigkeiten für die Versorgung kritisch kranker Früh- oder Neugeborener erworben werden, ohne das Leben oder die Gesundheit der Patienten zu gefährden. Der Qualitätsanspruch der heutigen Medizin erfordert es, dass auch seltene Ereignisse trainiert werden, um einerseits Leben zu retten und andererseits die Lebensqualität nach einer Notfallsituation zu verbessern.

Derzeit erhältliche Säuglings- und Neugeborenenpuppen lassen die Simulation vieler Pathologien aufgrund der geringen Größe und der so erforderlichen Miniaturisierung von Technik- und Steuerelementen nicht zu. Darüber hinaus mangelt es derartigen Simulationspuppen häufig an der Realitätstreue, wodurch an der Puppe geübte Handhabungen nicht automatisch die Tätigkeiten in der Realität verbessern.

Die WO2016/030393A offenbart einen Patientensimulator, umfassend eine Thoraxnachbildung, einen Lungensimulator und eine zum Lungensimulator führende anatomische Luftröhrennachbildung, wobei die Thoraxnachbildung eine Brustkorbnachbildung mit wenigstens einem heb- und senkbaren Brustkorbelement zur Simulation einer Brustkorbhebung und -senkung aufweist.

Die US4850876A beschreibt einen Patientensimulator mit einer Thoraxnachbildung und die US5584701A offenbart einen Patientensimulator, der einen Lungensimulator aufweist.

In der WO2012/155283A1 ist ein Lungensimulator beschrieben, der mit mindestens einer Luftkammer ausgestattet ist, die beispielsweise als Silikonbalg ausgebildet ist, um die Lungenfunktion in Krankheit sowie im gesunden Zustand bestmöglich zu simulieren. Nachteilig am in der WO2012/155283A1 offenbarten Lungenmodell ist, dass dieses aufgrund seiner Größe nicht innerhalb eines naturgetreuen Simulators (Puppe) anordenbar ist, sondern sich außerhalb der Puppe befindet.

Die vorliegende Erfindung zielt daher darauf ab, einen Patientensimulator, insbesondere Frühgeborenensimulator dahingehend zu verbessern, dass die Realitätstreue verbessert und die Simulation verschiedenster pathologischer Zustände auch bei einer kleinbauenden Ausführung für die Frühgeborenensimulation ermöglicht wird. Zur Lösung dieser Aufgabe sieht die Erfindung gemäß einem ersten Aspekt einen Patientensimulator nach Anspruch 1, insbesondere einen Frühgeborenen-, Neugeborenen- oder Kindersimulator vor, umfassend eine Thoraxnachbildung, einen Lungensimulator und eine zum Lungensimulator führende Luftröhrennachbildung, wobei die Thoraxnachbildung eine Brustkorbnachbildung mit wenigstens einem heb- und senkbaren Brustkorbelement zur Simulation einer Brustkorbhebung und -senkung aufweist, wobei das wenigstens eine heb- und senkbare Brustkorbelement mit einer vom Lungensimulator unabhängig ansteuerbaren Hub- und Senkmechanik zusammenwirkt.

Die Erfindung beruht somit darauf, den Lungensimulator und die Simulation der Brustkorbhebung und -senkung als funktional getrennte Einheiten auszubilden, die gesondert voneinander zur Durchführung von Simulationsvorgängen angesteuert werden können. Unter einem Lungensimulator ist hierbei die Nachbildung der grundlegenden atemmechanischen Parameter eines Menschen, wie insbesondere des Strömungswiderstandes der Atemwege (Resistance) und der Dehnbarkeit der Lunge (Compliance) zu verstehen. Im einfachsten Fall umfasst ein Lungensimulator eine pneumatische Reihenschaltung einer Resistance und einer Compliance. Der Lungensimulator dient dazu, verschiedene Zustände der Lunge eines Patienten z.B. hinsichtlich der Resistance und der Compliance zu simulieren, was insbesondere für das Üben der maschinellen Beatmung mit Hilfe eines Patientensimulators an echten Beatmungsgeräten von großem Vorteil ist. Um in diesem Zusammenhang eine endotracheale Intubation zu ermöglichen, umfasst der Patientensimulator erfindungsgemäß eine zum Lungensimulator führende Luftröhrennachbildung sowie vorzugsweise eine anatomische Kehlkopfnachbildung.

Bei herkömmlichen Ausführungen von Patientensimulatoren handelt es sich um ein pneumatisches Lungenmodell, meist einen elastischen Hohlkörper, der mit einer Spontanatmungs-Druckquelle verbunden ist, um den Hohlkörper entsprechend der simulierten Atmung periodisch zu füllen und zu entleeren, wodurch der Hohlkörper periodisch ausgedehnt und kontrahiert wird. Die Thoraxnachbildung ist bei herkömmlichen Ausführungen mit einem heb- und senkbaren Brustkorbelement ausgebildet, unter dem der elastische Hohlkörper des Lungensimulators angeordnet ist, sodass die Brustkorbhebung durch den Druck des sich ausdehnenden Hohlkörpers und die Brustkorbsenkung durch elastische Rückstellung des Brustkorbelements oder des Hohlkörpers erfolgt. Die Bewegung des Brustkorbs ist somit an die Spontanatmungssimulation und Beatmung des Lungensimulators direkt gekoppelt.

Im Gegensatz dazu kann die Brustkorbhebung und -senkung bei der erfindungsgemäßen Ausbildung unabhängig vom momentanen Zustand des Lungensimulators simuliert werden, weil das heb- und senkbare Brustkorbelement von einer vom Lungensimulator mechanisch bzw. körperlich unabhängigen Hub- und Senkmechanik angetrieben wird. Der Lungensimulator und die Brustkorbhebung und -senkung sind somit als funktional getrennte Einheiten ausgebildet, die gesondert voneinander zur Durchführung von Simulationsvorgängen angesteuert werden können. Dadurch können nicht nur physiologisch normale Zustände, sondern auch verschiedene pathologische Zustände realitätsgetreu simuliert und erweiterte Übungsmöglichkeiten für den Übungsteilnehmer geschaffen werden. Außerdem wird die Möglichkeit geschaffen, den Lungensimulator oder einzelne Komponenten desselben an einer anderen Stelle als unmittelbar unterhalb des heb- und senkbaren Brustkorbelements anzuordnen, wodurch eine platzsparende Anordnung erleichtert wird. Eine bevorzugte Ausbildung der Erfindung sieht in diesem Zusammenhang vor, dass der Lungensimulator innerhalb der Thoraxnachbildung und/oder innerhalb einer Abdomennachbildung angeordnet ist. Insbesondere kann der Lungensimulator oder einzelne Komponenten desselben innerhalb der Abdomennachbildung angeordnet werden.

Die unabhängige Ansteuerung der Heb- und Senkmechanik bietet den weiteren Vorteil, dass die Heb- und Senkbewegungen in einfacher Weise auf einer auf einem Bildschirm eines Geräts, wie z.B. eines PCs, angezeigten graphischen Benutzeroberfläche dargestellt werden können. Die graphische Benutzeroberfläche umfasst hierbei bevorzugt eine graphische Darstellung des simulierten Patienten, wobei die graphische Benutzeroberfläche derart mit dem Patientensimulator oder einer diesen ansteuernden Steuereinrichtung zusammenwirkt, dass auf der graphischen Benutzeroberfläche eine Hebung und eine Senkung des Brustkorbs des dargestellten Patienten dargestellt wird, die synchron ist mit der durch die Heb- und Senkmechanik des Patientensimulators bewirkten Brustkorbhebung und -senkung.

Zur Simulation physiologisch normaler Zustände des Atemsystems, insbesondere der Lunge, wird die Hub- und Senkmechanik der Thoraxnachbildung so angesteuert, dass sich das wenigstens eine heb- und senkbare Brustkorbelement synchron mit der Luftfüllung und -entleerung des Lungensimulators hebt und senkt. Dies ist insbesondere bei der Durchführung von Beatmungsübungen mit dem Patientensimulator der Fall, wie z.B. Beatmungsübungen mit Maske und Beatmungsbeutel. Der Simulator lässt sich hierbei bevorzugt dann beatmen, wenn der Kopf in der Neutralposition liegt und die Beatmungsmaske korrekt abgedichtet ist. Wenn sich am Simulator dann der Brustkorb hebt, so ist für den Benutzer (entsprechend der Realität) erkennbar, dass er effektiv beatmet. Zur technischen Umsetzung einer solchen Simulation ist bevorzugt vorgesehen, dass der Lungensimulator wenigstens eine Kavität, bevorzugt zwei Kavitäten, nämlich eine zur Simulation des rechten Lungenflügels und eine zur Simulation des linken Lungenflügels, aufweist, die - bevorzugt über die Luftröhrennahbildung - mit Luft aus einem Beatmungsgerät befüllbar ist bzw. sind, wobei Drucksensoren zur Messung des Drucks in der bzw. den Kavität(en) vorgesehen sind. Die Signale des bzw. der Drucksensors/en sind bevorzugt einer Steuereinrichtung zur Ansteuerung der Hub- und Senkmechanik der Thoraxnachbildung zugeführt, um das wenigstens eine heb- und senkbare Brustkorbelement in Abhängigkeit von den Drucksignalen anzuheben und abzusenken. Die Drucksensoren sind bevorzugt angeordnet und ausgebildet, um den Beatmungsdruck und das Beatmungsvolumen zu ermitteln. Die wenigstens eine Kavität des Lungensimulators, die bevorzugt als starrwandige Kavität ausgebildet ist, ist zu diesem Zweck bevorzugt im Volumen verstellbar ausgebildet. Das Volumen kann gemäß den physikalischen Grundlagen der Compliance und Resistance dynamisch angepasst werden. Die Berechnung des aktuellen Volumens basiert z.B. auf einem angepassten Algorithmus innerhalb eines Mikrocontrollers. Zur Einstellung der physiologischen und pathologischen Atemparameter des Lungensimulators ist bevorzugt ein elektrischer Antrieb vorgesehen.

Alternativ kann die Lunge auch passiv ausgeführt werden. Dazu wird die Kammer flexibel ausgeführt, beispielsweise als Kammer mit einer geöffneten Seite, welche von einer flexiblen Membran überspannt wird. Die Ausdehnung der Membran in Abhängigkeit vom Beatmungsdruck erlaubt hierbei die Simulation des Tidalvolumens. Durch die Wahl der Dicke, des Materials oder der Einstellbarkeit der Spannung der Membran kann die Compliance der Lunge an ein real vergleichbares Äquivalent angepasst werden.

Im Zusammenhang mit der Simulation von pathologischen Zuständen ist das Atemnotsyndrom von besonderer Bedeutung. Im Rahmen eines Atemnotsyndroms ist eine effektive Atmung und Belüftung der Lungen erschwert. Auf Grund des Unterdrucks in der Lunge, die sich nur schlecht mit Luft füllen kann, wird das Zwerchfell in Richtung Brustkorb gezogen. Der Brustkorb hebt sich kaum und senkt sich scheinbar bei Anspannen des Zwerchfells. Dadurch entsteht der Eindruck einer Schaukelatmung bzw. paradoxen Atmung, da sich der Brustkorb beim Einatmen senkt und beim Ausatmen scheinbar hebt. Durch die gegenläufige Bewegung des Abdomens wird dieser Eindruck noch verstärkt. Die Simulation einer Schaukelatmung wird im Rahmen der Erfindung durch die vom Lungensimulator unabhängige Steuerung der Hub- und Senkmechanik des wenigstens einen heb- und senkbaren Brustkorbelements ermöglicht, wobei die Steuereinheit der Hub- und Senkmechanik eingerichtet ist, um das wenigstens eine Brustkorbelement anzuheben, wenn eine Ausatmung simuliert wird, und abzusenken, wenn eine Einatmung simuliert wird. Ergänzend kann vorgesehen sein, dass eine Abdomennachbildung des Patientensimulators eine heb- und senkbare Bauchplatte aufweist, die von einer Hub- und Senkmechanik der Abdomennachbildung angetrieben wird. Der optische Eindruck einer Schaukelatmung wird hierbei dadurch erreicht, dass sich die Bauchplatte während der Einatmung hebt und sich der Brustkorb gleichzeitig senkt und sich die Bauchplatte bei der Ausatmung senkt und sich der Brustkorb gleichzeitig hebt.

Weiters kann mit dem erfindungsgemäßen Patientensimulator ein Pneumothorax simuliert werden. Der Pneumothorax ist eine gefürchtete Komplikation bei einem unreifen Frühgeborenen. Dabei kommt es zu einem Riss in der Lunge und damit zu einer akuten Notfallsituation. Erkennbar ist dies dadurch, dass sich der Brustkorb auf der betreffenden Seite nicht mehr hebt. Eine bevorzugte Ausbildung zur Simulation eines Pneumothorax sieht hierbei vor, dass wenigstens ein rechtes heb- und senkbares Brustkorbelement für die rechte Brustkorbhälfte und wenigstens ein linkes heb- und senkbares Brustkorbelement für die linke Brustkorbhälfte vorgesehen sind, die gesondert voneinander heb- und senkbar ausgebildet sind und die jeweils mit einer eigenen ansteuerbaren Hub- und Senkmechanik zusammenwirken, wobei die Hub- und Senkmechanik für das rechte Brustkorbelement und die Hub- und Senkmechanik für das linke Brustkorbelement unabhängig voneinander ansteuerbar sind. Auf Grund der Anordnung von getrennten Hub- und Senkmechaniken für die rechte und die linke Brustkorbhälfte ist es in einfacher Weise möglich einen Pneumothorax sowohl bei Eigenatmung als auch bei jeglicher Form der Beatmung zu simulieren. Hierfür wird nur eine der beiden Hub- und Senkmechaniken (rechts oder links) angesteuert. Dies resultiert in einer einseitigen Hebung des Brustkorbs, was für den Trainingsteilnehmer gut als einseitiger Pneumothorax erkennbar ist.

Eine bevorzugte Ausbildung sieht vor, dass die Hub- und Senkmechanik(en) in der Thoraxnachbildung, insbesondere unter dem wenigstens einen heb- und senkbaren Brustkorbelement, angeordnet ist bzw. sind.

Die Hub- und Senkmechanik kann grundsätzlich beliebig angetrieben werden, z.B. pneumatisch, hydraulisch oder elektrisch. Bevorzugt erfolgt das Anheben und Absenken des Brustkorbelements mit Hilfe eines Elektromotors, zu welchem Zweck die Hub- und Senkmechanik(en) jeweils eine elektromotorische Antriebseinheit aufweist, die bevorzugt einen zu Schwenkbewegungen antreibbaren Arm umfasst. Der Schwenkarm erlaubt eine platzsparende Ausbildung der Hub- und Senkmechanik und ermöglicht gleichzeitig eine Hub- und Senkbewegung mit relativ großem Hub.

In Bezug auf den Lungensimulator ist bevorzugt vorgesehen, dass dieser wenigstens ein Stellelement zur Einstellung der Compliance und Resistance aufweist. Die Nachstellung der Lunge kann hierbei durch eine insbesondere starrwandige Kammer mit einem steuerbaren, das Kammervolumen bestimmenden Kolben gebildet sein, der das nachgestellte Lungenvolumen in Abhängigkeit von Druck und Zeit variieren kann, wobei durch Veränderung der Druckbeaufschlagung des Kolbens sowohl die Compliance als auch die Resistance eingestellt werden können. Bevorzugt ist der Kolben von einem Federelement druckbeaufschlagt, das eine sog. Grundcompliance zur Verfügung stellt, d.h. das Federelement bedingt ein passives Halten des Drucks im Lungensimulator. Zur Veränderung der Druckbeaufschlagung des Kolbens kann ein Federelement vorgesehen sein, das mit dem Kolben zusammenwirkt und dessen Vorspannung veränderbar ist. Zur Veränderung des Kammervolumens kann ein mit dem Kolben zusammenwirkender, insbesondere elektromotorischer oder magnetischer Antrieb vorgesehen sein. Der Antrieb ist vorzugsweise von einem Linearmotor gebildet.

In einer vereinfachten, alternativen Lungensteuerung werden die biologischen Parameter Compliance und Resistance bevorzugt getrennt voneinander geregelt und weisen zumindest jeweils ein Steuerelement für Compliance und Resistance auf. In dieser bevorzugten Ausführungsform wird für die Steuerung der Compliance die Elastizität durch unterschiedliches Spannen der Lungenwand des Simulators gebildet. Die Regelung des Atemwegswiderstands (Resistance) wird getrennt davon mit einem justierbaren oder schnellschaltenden Ventil zur Einstellung des Luftwiderstandes geregelt.

Zur Realisierung der Nachstellung der Verbesserung der Oxygenierung bei einem Surfactant Mangel Syndrom nach der Gabe eines Surfactant-Präparates oder einer Nachstellung dieses Medikaments mit einer Flüssigkeit ist in der Thoraxnachbildung, insbesondere in einer Atemwegsnachbildung, vorzugsweise in der Luftröhrennachbildung, ein Sensor vorgesehen. Bevorzugt ist der Sensor austauschbar in einer Wand der Atemwegsnachbildung eingearbeitet und umfasst ein flüssigkeitsadsorbierendes Material, insbesondere ein Schaummaterial und einen in das Material integrierten Feuchtesensor. Der Sensor detektiert das Einspritzen einer Flüssigkeit, wie z.B. eines Surfactant-Präparates, in den Atemweg und/oder die Lunge, indem das trockene Material, insbesondere Schaummaterial die Flüssigkeit aufsaugt und damit seine elektrische leitende Eigenschaft ändert. Sobald die Gabe des Surfactant-Präparates detektiert wurde, zeigt der Patientensimulator eine Veränderung der pathologischen Parameter und senkt entsprechend eines zeitlichen Verlaufs die Werte von Compliance und Resistance des Lungensimulators entsprechend der klinischen Realität.

Zusätzlich zur sensorischen Funktion der Surfactantsensorik erfüllt der Sensor mit dem Schaummaterial die Funktion eines Schmutzfilters für den Lungensimulator und eröffnet beim Wechseln des Sensors die Möglichkeit den Atemweg durch Spülen mit einer Reinigungsflüssigkeit über einem Reinigungsstopfen zu säubern.

Der wechselbare Feuchtesensor mit einem Schaumstoffkern ist im Atemweg demgemäß zum Detektieren von Flüssigkeiten und Filtrieren der Atemluft integriert.

Zur realistischeren Darstellung eines Atemnotsyndroms kann eine sogenannte interkostale Einziehung der Haut simuliert werden. Bei einem Atemnotsyndrom ist die Einatmung behindert. Durch den im Brustkorb bei der Einatmung entstehenden Unterdruck wird Haut und Gewebe gegen die starreren Anteile (Skelett) in die flexiblen Abschnitte eingezogen. Dies ist vor allem im Bereich der Zwischenrippenräume ("interkostal") sichtbar. Eine bevorzugte Ausbildung der Erfindung sieht in diesem Zusammenhang vor, dass das wenigstens eine heb- und senkbare Brustkorbelement eine Mehrzahl von Rippennachbildungen umfasst und die Thoraxnachbildung eine Hautnachbildung aufweist, welche die Rippennachbildungen überdeckt und gemeinsam mit dem wenigstens einen heb- und senkbaren Brustkorbelement heb- und senkbar ist, wobei am wenigstens einen heb- und senkbaren Brustkorbelement ein an der Hautnachbildung angreifendes Zug- oder Druckmittel, wie z.B. wenigstens ein Faden oder ein stabförmiges Zugelement, befestigt ist und wobei das wenigstens eine heb- und senkbare Brustkorbelement ein Antriebselement, insbesondere einen Elektromotor zum Verlagern des Zugmittels trägt, um eine interkostale Einziehung der Hautnachbildung zu bewirken. Dadurch, dass das Antriebselement zum Verlagern des Zugmittels am heb- und senkbaren Brustkorbelement angeordnet bzw. befestigt ist, wird das Antriebselement bei den die (Be-)Atmung simulierenden Hub- und Senkbewegungen des Brustkorbelements mitbewegt, sodass die Simulation der interkostalen Einziehung unabhängig von der aktuellen Hebestellung des Brustkorbelements vorgenommen werden kann.

In einer weiteren Ausführungsform kann die Einziehung durch magnetische Kraftwirkung erfolgen indem in die Haut magnetische Elemente eingearbeitet sind und diese durch elektrisch angesteuerte Magnetspulen in mindestens einem Interkostalraum atemsynchron angezogen werden.

Weiters kann bevorzugt vorgesehen sein, dass der Patientensimulator dazu ausgebildet ist, den pathologischen Zustand der nekrotisierenden Enterokolitis zu simulieren. Die nekrotisierende Enterokolitis (NEC) ist eine z.T. dramatisch verlaufende Erkrankung des Darmes, die als Komplikation bei der Behandlung von Frühgeborenen gefürchtet ist. Sie stellt in dieser Patientengruppe die häufigste akute Erkrankung des Magen-Darm-Traktes dar mit zum Teil dramatischen Folgen für das Frühgeborene. Durch eine verminderte Durchblutung (Minderperfusion) der Darmwand im Zusammenhang mit einer Infektion kommt es bei der NEC zu einem Gewebsuntergang (Nekrose) in der Darmwand. Diese tritt meist im Bereich des terminalen Ileum und des Colon ascendens auf und geht häufig mit der Bildung von Fäulnisgasen in der Darmwand (Pneumatosis intestinalis) einher. Mit Zunahme der Schädigung kann die Darmwand perforieren und es kommt zu einem Austritt von Darminhalt in die freie Bauchhöhle. Entzündungsreaktion, Peritonitis und Sepsis sind die Folge.

Klinisches Zeichen einer nekrotisierenden Enterokolitis ist ein z.T. massiv geblähter Bauch mit erweiterten Darmschlingen, eine fehlende Peristaltik und daher fehlende Darmgeräusche. Die lokale Infektion mit einem Austritt von Darminhalt führt zu einer lividen (weiß, gräulich, bläulichen) Verfärbung der Bauchhaut und zu einem Hervortreten der Venenzeichnung in diesem Bereich unterschiedlicher Ausprägung. Als Folge der Blähung des Darmes und damit des gesamten Bauches kommt es mitunter zu einer massiven Einschränkung der Spontanatmung, da der überblähte Bauch die Lunge nach oben in den Thorax drückt und so komprimiert. Dadurch wird die Spontanatmung häufig massiv beeinträchtigt. Daher müssen Frühgeborene mit einer schweren NEC häufig akut intubiert und maschinell beatmet werden.

Zur Simulation der NEC ist der Patientensimulator ausgebildet, um die nachfolgenden Vorgänge auszuführen. Die Simulation der Blähung und Verhärtung des Bauchs erfolgt mittels der Anhebung der Bauchplatte. Hierzu wird die Bauchplatte in die Maximalposition gestellt und in dieser gehalten. Wird von außen eine Kraft ausgeübt, ist bevorzugt vorgesehen, dass der Antrieb der Bachplattenanhebung eine einstellbare, maximale Gegenkraft ausübt, um die Verhärtung zu simulieren. Gleichzeitig erfolgt über die physiologischen Regelkreise des Lungenmodells bevorzugt eine Verminderung der Compliance der Lunge. Das Lungenvolumen wird reduziert und für die Beatmung wird ein höherer Beatmungsdruck notwendig. Die ggf. vorgesehene Umsetzung der Verfärbung des Simulators erfolgt bevorzugt durch farbige LEDs, welche die Hautnachbildung des Simulators im Bauchbereich von innen beleuchten und in der geforderten Farbe schimmern lassen. Diese LEDs können die Grundfarben rot, grün und blau entsprechend der Vorgabe mischen um eventuelle Verfärbungen in der Silikonhaut ausgleichen. Zur Simulation der hervortretenden Gefäßzeichnung werden die Gefäße an der Innenseite der Hautnachbildung deckend koloriert bzw. in die Wandung der Hautnachbildung eingearbeitet. Unter der direkten oder diffusen Beleuchtung durch die LEDs der Hebeplatte werden diese Gefäßnachbildungen durch die gespannte Haut dann sichtbar.

Ein bevorzugter Aspekt der vorliegenden Erfindung sieht in diesem Zusammenhang einen Patientensimulator, insbesondere Frühgeborenensimulator, vor, umfassend einen Lungensimulator und eine Abdomennachbildung, die eine heb- und senkbare Bauchplatte aufweist, die von einer Hub- und Senkmechanik angetrieben wird, wobei eine Steuervorrichtung dazu eingerichtet ist, die Bauchplatte anzuheben und gleichzeitig den Beatmungswiderstand des Lungenmodels zu erhöhen. In bevorzugter Weise ist hierbei vorgesehen, dass die Abdomennachbildung einschließlich der Bauchplatte von einer Hautnachbildung überspannt ist, deren Innenseite von in der Abdomennachbildung angeordneten Leuchtmitteln beleuchtbar ist.

Weiters kann der erfindungsgemäße Patientensimulator bevorzugt ausgebildet sein, um das Symptom des "Head Bobbing" zu simulieren, einem Zeichen einer erhöhten Atemarbeit bei Früh- und Neugeborenen. Die Erniedrigung der Compliance der Lunge führt dabei durch die Aktivität der Atemhilfsmuskulatur im Bereich des Kopfes (M. sternocleidomostoideus) zu ruckartigen, atemsynchronen Vorwärtsbewegungen des Kopfes mit jeder Inspiration. Zur Simulation dieses Symptoms kann ein Servomotor oder ein vergleichbares Antriebselement vorgesehen sein, der unter Vermittlung eines Gestänges oder eines vergleichbaren flexiblen Umsetzungselements, wie ein Seilzug, den Winkel zwischen der Kopfnachbildung und der Thoraxnachbildung des Simulators ändert. Diese Bewegung wird vorzugsweise über die zentrale Steuerung mit der Atemtätigkeit synchronisiert.

Die technische Umsetzung des "head bobbing" erfolgt beispielsweise über zwei Bowdenzüge, die symmetrisch an der linken und rechten Seite der Atemwegsnachbildung verlaufen, sowie auf Grund der Rückstellkraft der gespannten Silikonkomponenten des Simulators.

Ein bevorzugter Aspekt der vorliegenden Erfindung sieht in diesem Zusammenhang einen Patientensimulator, insbesondere Frühgeborenensimulator, vor, umfassend einen Lungensimulator, eine Thoraxnachbildung, die ein heb- und senkbares Brustkorbelement aufweist, das von einer Hub- und Senkmechanik angetrieben wird, und eine Kopfnachbildung, die mit einer Kippmechanik zu Änderung des Winkels zwischen Kopfnachbildung und Thoraxnachbildung zusammenwirkt, wobei eine Steuervorrichtung dazu eingerichtet ist, die Kippmechanik zu einer periodischen Kippbewegung der Kopfnachbildung anzutreiben, wobei die periodische Kippbewegung mit der Heb- und Senkbewegung des Brustkorbelements synchronisiert ist.

Allgemein ist bei jedem der oben beschriebenen Aspekte der Erfindung bevorzugt vorgesehen, dass der Patientensimulator einen vollständigen Körper des jeweiligen Patienten, d.h. insbesondere eines Frühgeborenen, eines Neugeborenen oder Kindes darstellt und daher neben einer Thorax-, einer Abdomen-, einer Kopfnachbildung auch Nachbildungen der Extremitäten umfasst. Weiters ist der Patientensimulator in seinen Abmessungen und in Bezug auf die Größenverhältnisse seiner nachgebildeten Körperteile so ausgebildet, dass er den Abmessungen und den Größenverhältnissen eines realen Patienten, d.h. eines menschlichen Frühgeborenen, Neugeborenen oder Kindes entspricht.

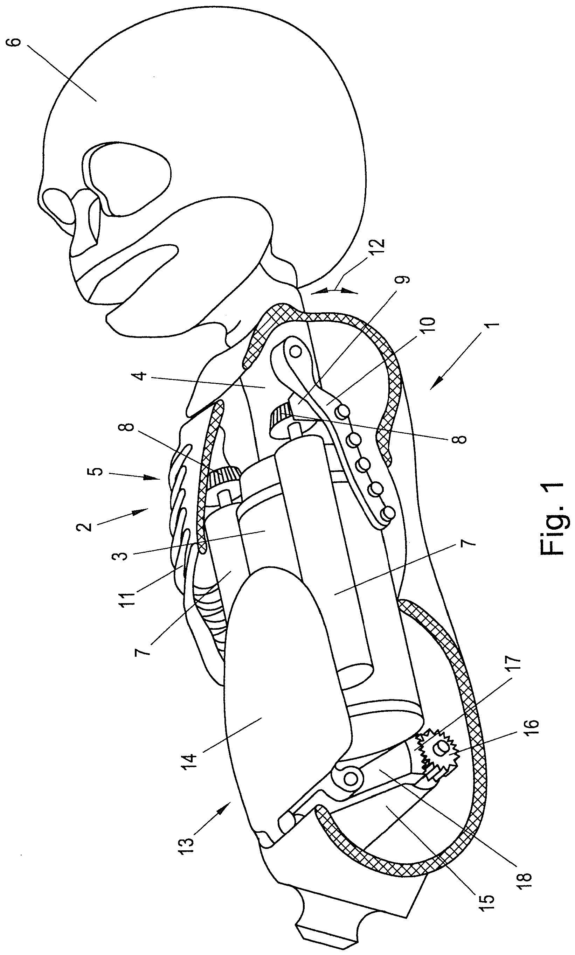

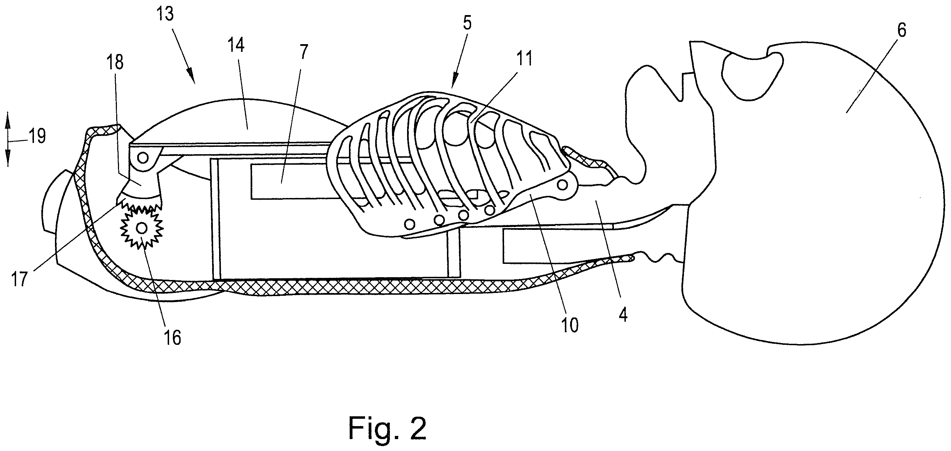

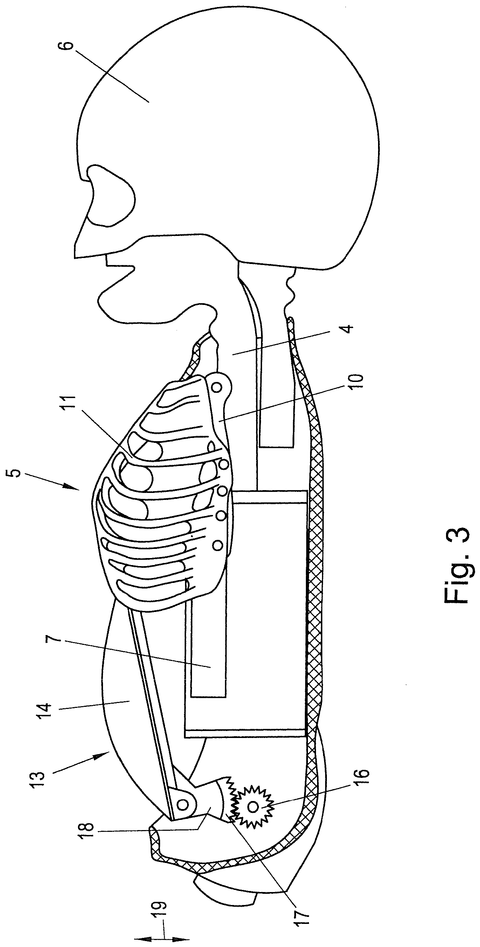

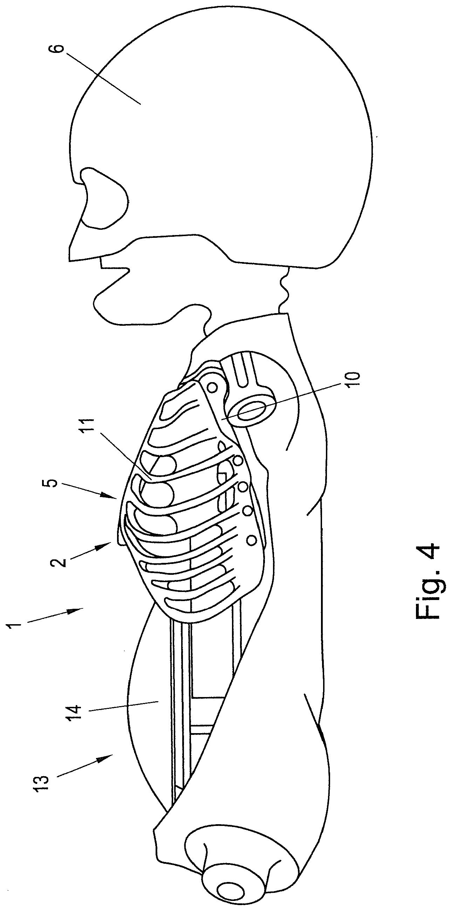

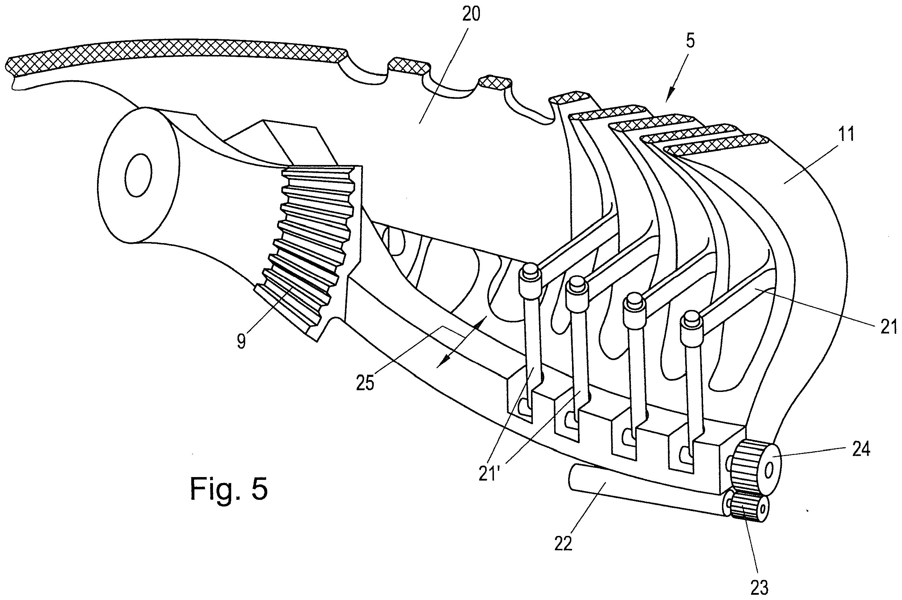

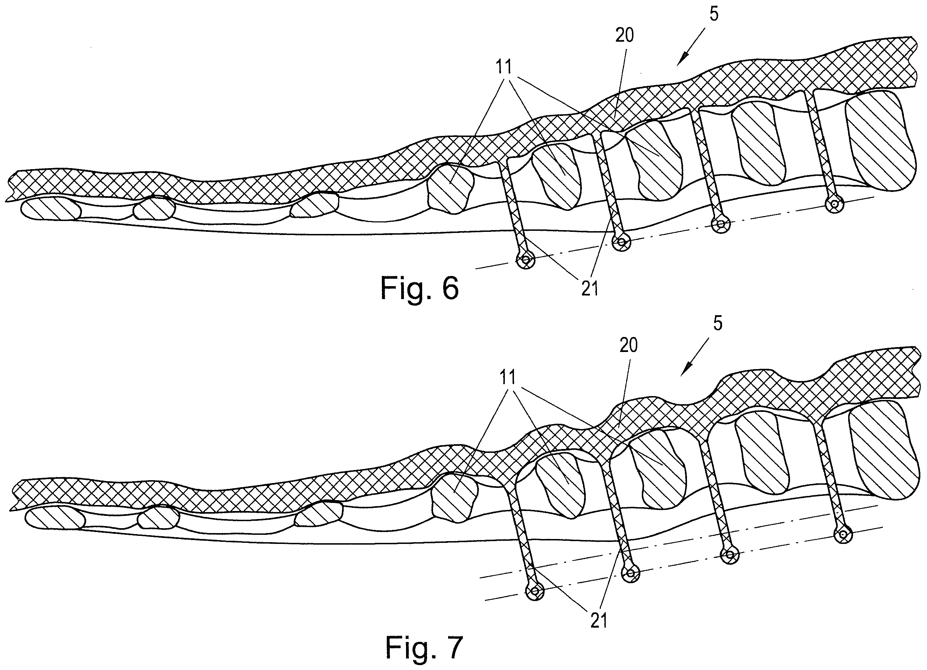

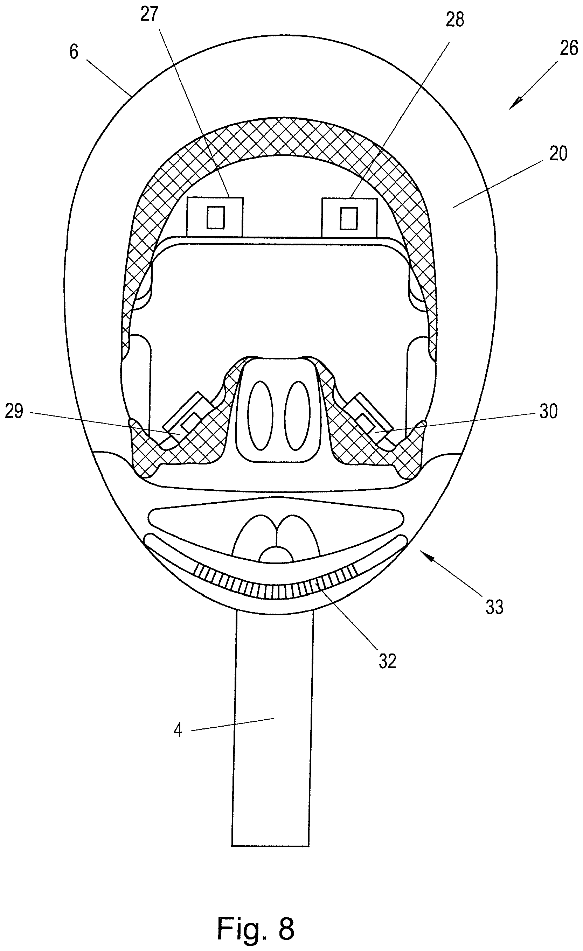

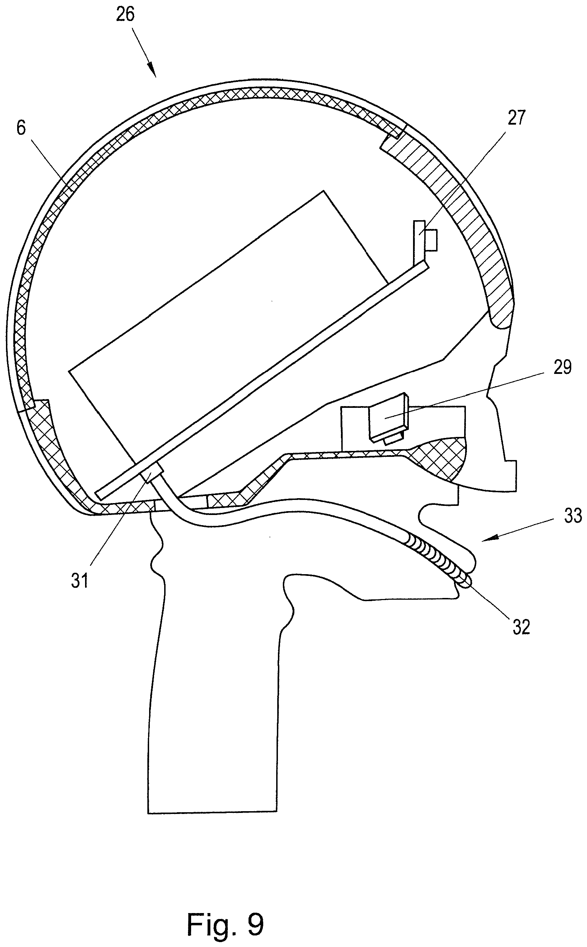

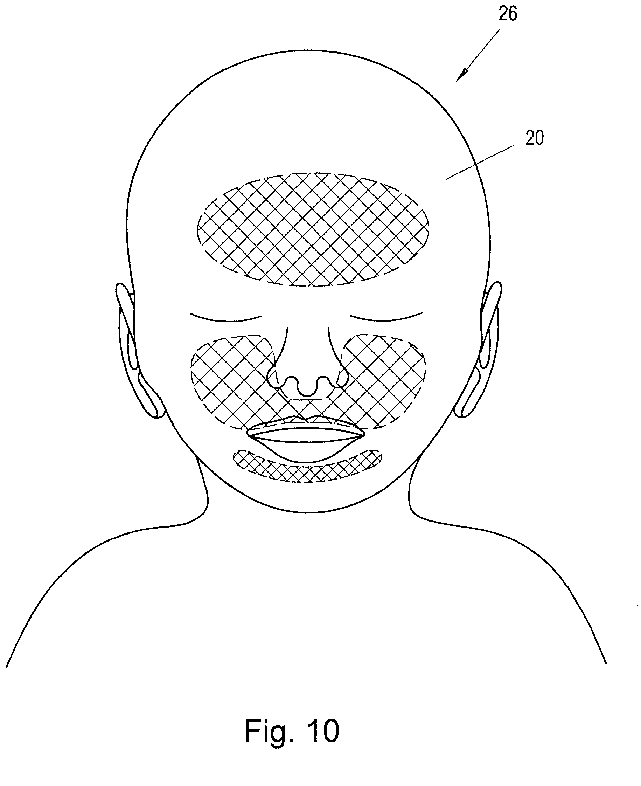

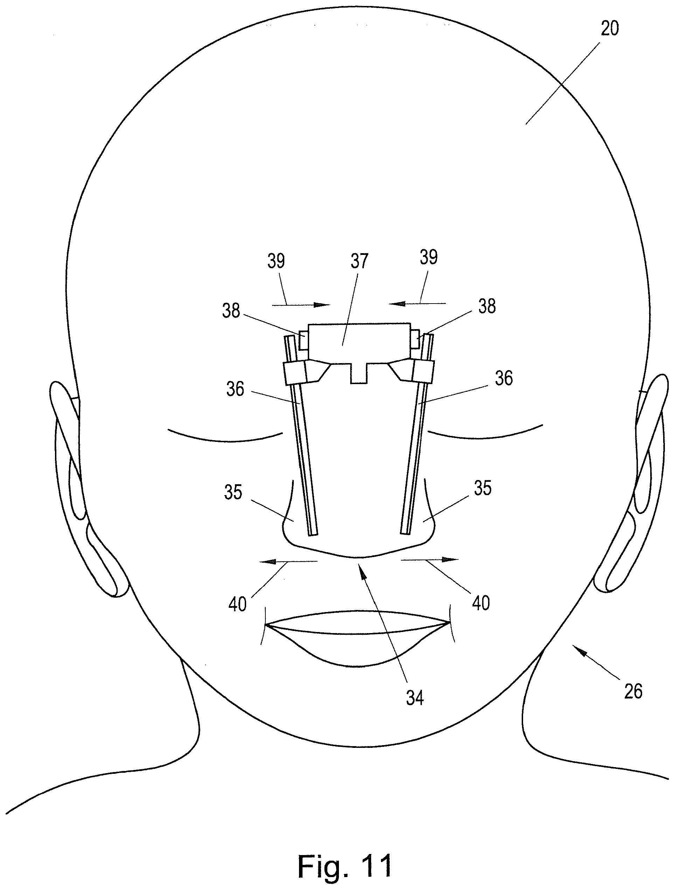

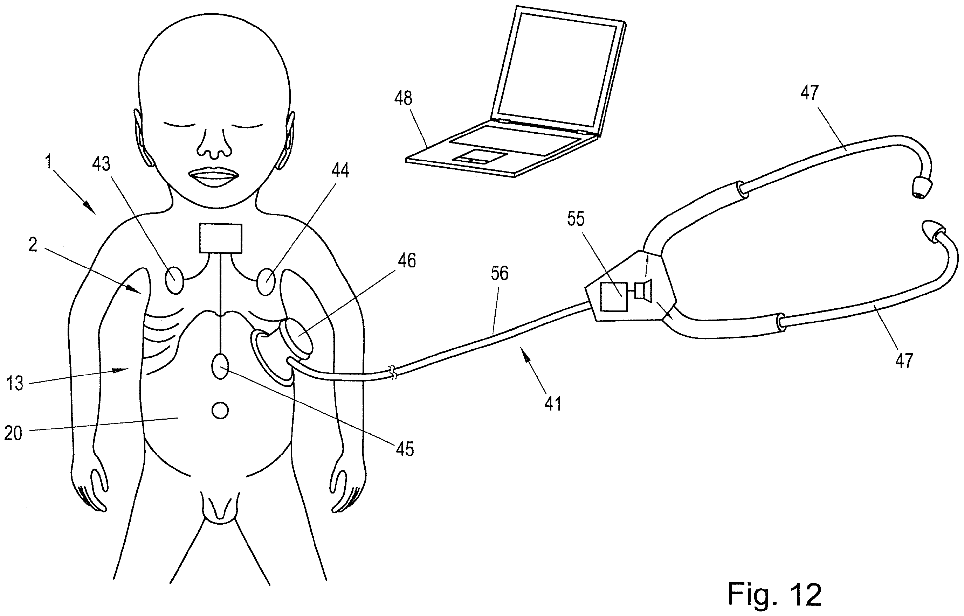

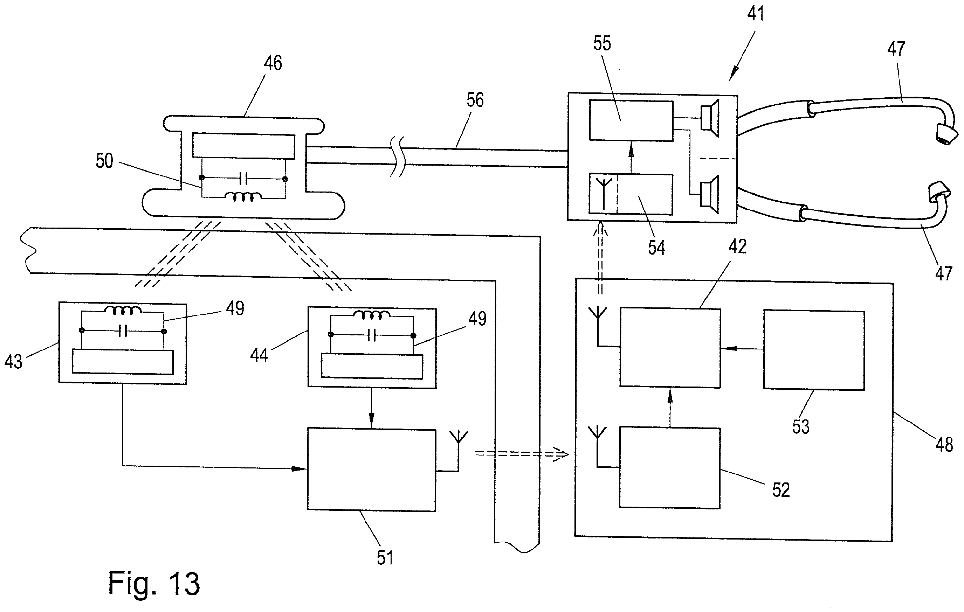

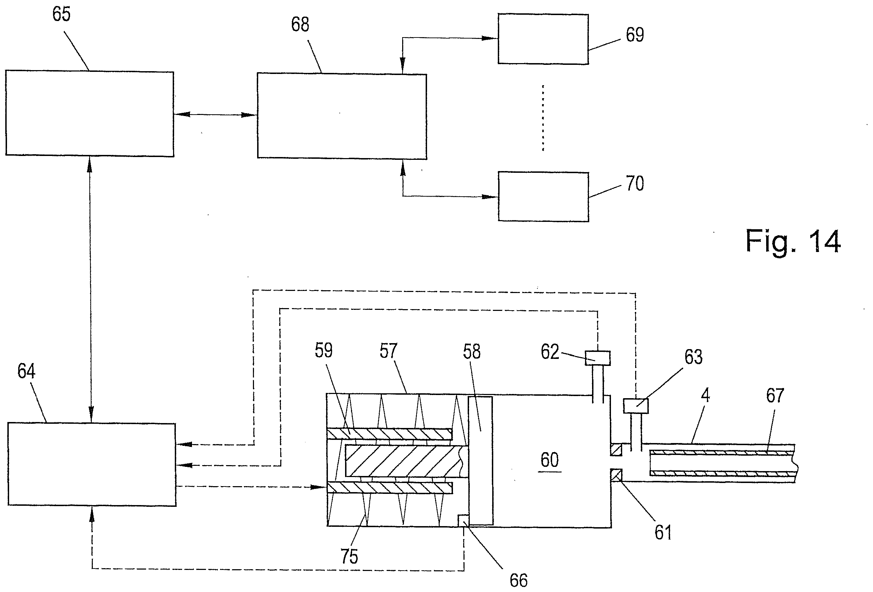

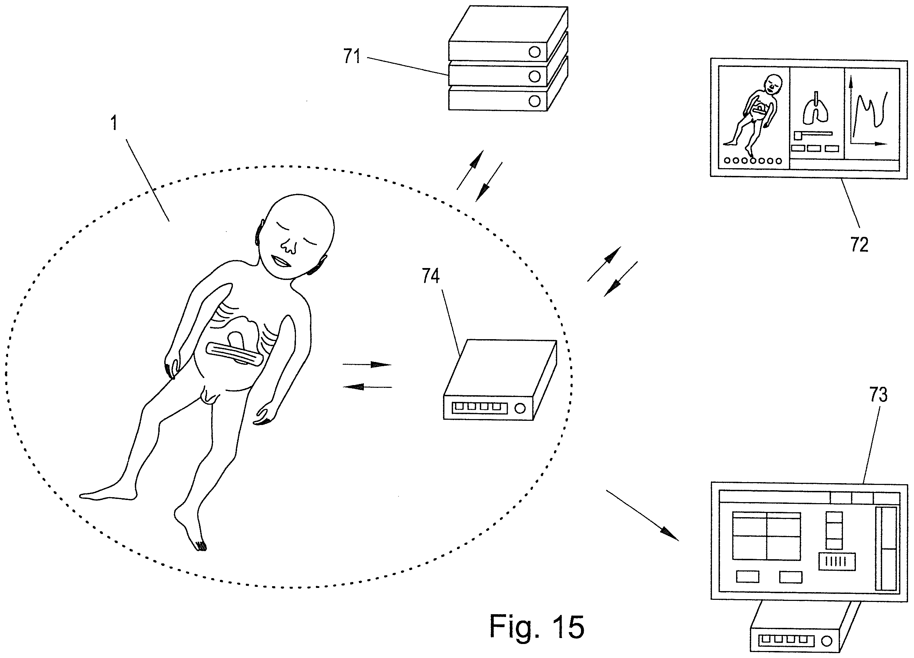

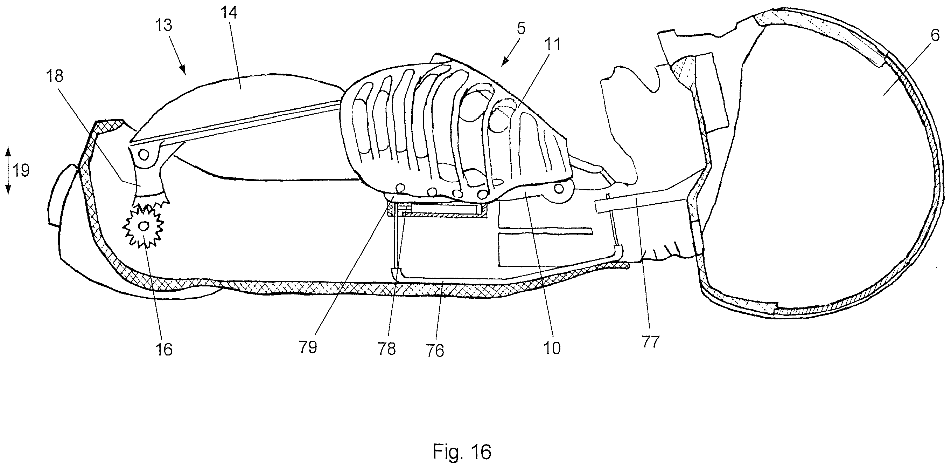

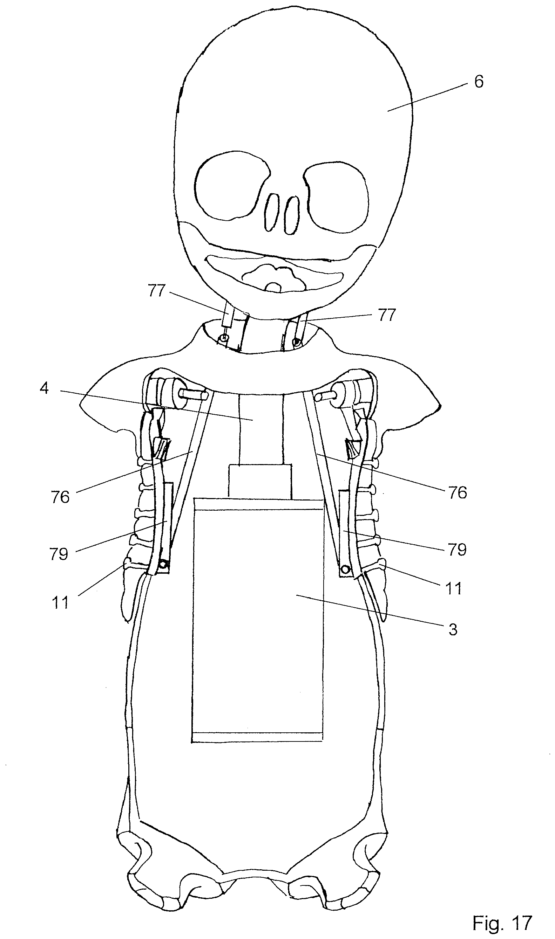

Die Erfindung wird nachfolgend anhand von in der Zeichnung schematisch dargestellten Ausführungsbeispielen näher erläutert. In dieser zeigt Fig.1 einen Frühgeborenensimulator in teilweise geöffneter Darstellung, Fig. 2 und Fig. 3 den Frühgeborenensimulator mit einer Bauchplatte in unterschiedlichen Stellungen, Fig. 4 eine weitere Darstellung des Frühgeborenensimulators, Fig. 5 eine Detailansicht des Frühgeborenensimulators mit einem Mechanismus zur interkostalen Einziehung, Fig. 6 und Fig. 7 eine Darstellung der Hautnachbildung in zwei verschiedenen Zuständen der interkostalen Einziehung, Fig. 8 eine Schnittansicht der Schädelnachbildung des Frühgeborenensimulators, Fig. 9 eine weitere Schnittansicht der Schädelnachbildung des Frühgeborenensimulators, Fig. 10 eine Vorderansicht der Schädelnachbildung des Frühgeborenensimulators, Fig. 11 eine Detaildarstellung der Schädelnachbildung im Bereich der Nase, Fig. 12 eine Stethoskopnachbildung im Zusammenwirken mit dem Frühgeborenensimulator, Fig. 13 ein Schaltbild der Stethoskopnachbildung, Fig. 14 eine Übersichtsdarstellung der Steuerlogik des Patientensimulators insbesondere betreffend das Lungenmodell, Fig. 15 eine Gesamtübersicht des Patientensimulators samt Steuer- und Überwachungskomponenten Fig. 16 eine Seitenansicht des Simulators mit der atemsynchronen Kopfbewegung und Fig. 17 eine Vorderansicht des Simulators gemäß Fig. 16.

Fig.1 zeigt einen Frühgeborenensimulator 1, der eine Thoraxnachbildung 2, einen Lungensimulator 3 und eine zum Lungensimulator 3 führende Luftröhrennachbildung 4 umfasst. Die Thoraxnachbildung 2 umfasst ein rechtes heb- und senkbares Brustkorbelement 5 für die rechte Brustkorbhälfte und ein linkes heb- und senkbares Brustkorbelement für die linke Brustkorbhälfte (in Fig.1 nicht dargestellt). Weiters umfasst der Simulator 1 eine Schädelnachbildung 6. Die beiden Brustkorbelemente 5 sind gesondert voneinander heb- und senkbar ausgebildet und jeweils mit einer eigenen ansteuerbaren Hub- und Senkmechanik ausgestattet. Die im Inneren des Simulators 1 angeordnete Hub- und Senkmechanik umfasst beiderseits jeweils eine elektromotorische Antriebseinheit 7, welche ein Zahnrad 8 antreibt. Das Zahnrad 8 greift in eine am schwenkbar gelagerten Arm 10 ausgebildete Zahnung 9 ein, wobei am Arm 10 das jeweilige rechte bzw. linke Brustkorbelement 5 befestigt ist, sodass die Drehbewegung des Zahnrads 8 je nach Drehrichtung in eine Hub- bzw. Senkbewegung des Arms 10 mit dem Brustkorbelement 5 in Richtung des Doppelpfeils 12 übersetzt wird. Das linke und das rechte Brustkorbelement 5 weisen jeweils eine Rippennachbildung 11 auf.

Weiters umfasst der Simulator 1 eine Abdomennachbildung 13, die eine heb- und senkbare Bauchplatte 14 aufweist, wobei die Hebung und Senkung der Bauchplatte 14 - analog zur Hebung und Senkung der Brustkorbelemente 5 - durch eine elektromotorische Antriebseinheit 15 erfolgt, welche ein Zahnrad 16 antreibt, das wiederum in eine Zahnung 17 eingreift, die an einem schwenkbar gelagerten Arm 18 ausgebildet ist, an welchem die Bauchplatte 14 befestigt ist.

Fig. 2 zeigt die Bauchplatte 14 und die Brustkorbelemente 5 in abgesenkter Position und Fig.3 zeigt die Bauchplatte 14 und die Brustkorbelemente 5 in angehobener Position.

Bei Betätigung der elektromotorischen Antriebseinheit 15 (in Fig.2 und Fig.3 nicht gezeigt) dreht sich das Zahnrad 16 und eine Hebung/Senkung der Bauchplatte 14 in Pfeilrichtung 19 wird durch Eingriff des Zahnrads 16 in die Verzahnung 17 und die dadurch induzierte Verschwenkung des antreibbaren Arms 18 bewirkt. Je nach Drehrichtung des Zahnrads 16 ist eine Simulation der Abdomenhebung bzw. -senkung möglich.

Fig.4 zeigt die komplette anatomische Stützkonstruktion des Simulators 1 über der eine Hautnachbildung 20 (in Fig. 4 nicht dargestellt) liegt, welche den gesamten Simulator 1, d.h. auch die Thoraxnachbildung 2 mit den Rippennachbildungen 11, sowie die Abdomennachbildung 13 mit der Bauchplatte 14 überdeckt. Insbesondere umschließt die Hautnachbildung 20 die Thoraxnachbildung 2 sowie die Abdomennachbildung 13. Die Hautnachbildung 20 ist aus einem elastischen Material, wie z.B. aus einem Silikonmaterial, hergestellt, um die Hebung und Senkung der Brustkorbelemente 5 sowie der Bauchplatte 14 zuzulassen.

In den Fig.5 bis 7 ist weiters gezeigt, dass zur Simulation einer interkostalen Einziehung an der Hautnachbildung 20 angreifende Zugmittel 21 vorgesehen sind. Die Zugmittel 21 erstrecken sich zwischen den einzelnen Rippen der Rippennachbildung 11 hindurch und sind an ihrem der Hautnachbildung 20 abgewandten Ende jeweils an Schwenkstangen 21' befestigt. Die Schwenkstangen 21' sind an einer gemeinsamen Achse starr befestigt und daher um diese Achse schwenkbar, wobei zum Schwenkantrieb eine elektromotorische Antriebseinheit 22 vorgesehen ist, welche das Zahnrad 23 zur Drehbewegung antreibt, welches in das an der Achse der Schwenkstangen 21' befestige Zahnrad 24 eingreift. Die Verschwenkung der Schwenkstangen 21' im Sine des Doppelpfeils 25 bewirkt, dass die Hautnachbildung 20 zwischen die Rippennachbildungen 11 gezogen wird bzw. wieder in ihre Normalposition zurückbewegt wird. Je nach Drehrichtung des Antriebs 22 ist somit eine Simulation der interkostalen Einziehung oder der Normalposition der Hautnachbildung 20 möglich. Der Antrieb 22 ist hierbei am Arm 10 befestigt, der für das Anheben und das Absenken der Rippennachbildungen 11 verantwortlich ist. Dadurch, dass der Antrieb 22 bei einem Anheben oder Absenken des Arms mit diesem mitbewegt wird, kann die Simulation der interkostalen Einziehung der Hautnachbildung 20 unabhängig von der jeweiligen Stellung der Rippennachbildung 11 erfolgen.

In Fig.6 ist die Hautnachbildung 20 in der Normalposition und in Fig.7 bei simulierter, interkostaler Einziehung dargestellt.

Fig.8 und Fig.9 zeigen eine Kopfnachbildung 26 des Simulators 1, welche eine Schädelnachbildung 6 aufweist. Innerhalb der Schädelnachbildung 6 sind die Lichtquellen 27, 28, 29, 30 und 31 angeordnet.

Die Lichtquellen 27 und 28 sind an einer im Schädelhohlraum angeordneten Trägerplatte befestigt und im Bereich der Stirn gegen die Innenoberfläche der Schädeldecke der Schädelnachbildung 6 gerichtet. Die Lichtquellen 29 und 30 befinden sich in der mittleren Schädelgrube der Schädelnachbildung 6. Eine weitere Lichtquelle 31 ist im Inneren der Schädelnachbildung 6 angeordnet und speist einen Lichtwellenleiter 32, der sich bogenförmig im Kinnbereich 33 der Kopfnachbildung 26 erstreckt.

Dadurch, dass die Schädelnachbildung 6 und die Hautnachbildung 20 transluzent ausgebildet sind, ergibt sich bei Betätigung der Lichtquellen 27 bis 31 ein wie in Fig. 10 dargestelltes Beleuchtungsmuster der sich bei einer vorliegenden Zyanose charakteristisch blau und bei einer Hyperoxie charakteristisch rot färbenden Gesichtsbereiche.

Fig.11 zeigt die Kopfnachbildung 26 des Simulators 1 mit einer Nasennachbildung 34, die zwei flexible Nasenflügel 35 aufweist, wobei an den Nasenflügeln 35 in das Innere der Kopfnachbildung 26 führende Hebel 36 angreifen, die aus einem magnetisierbaren Material bestehen. Weiters ist eine Steuervorrichtung 37 vorgesehen, die Elektromagnete 38 trägt, wobei bei Ansteuerung der Steuervorrichtung 37 die Elektromagnete 38 aktiviert werden und die magnetischen Hebel 36 entsprechend der Pfeile 39 angezogen werden, was wiederum ein Aufweiten der Nasenflügel im Sinne der Pfeile 40 bedingt.

Fig. 12 zeigt eine Hautnachbildung 20, welche den gesamten Simulator 1, d.h. auch die Thoraxnachbildung 2 mit den Rippennachbildungen 11, sowie die Abdomennachbildung 13 mit der Bauchplatte 14 überdeckt. Insbesondere umschließt die Hautnachbildung 20 die Thoraxnachbildung 2 sowie die Abdomennachbildung 13. Die Hautnachbildung 20 ist aus einem elastischen Material, wie z.B. aus einem Silikonmaterial, hergestellt, um die Hebung und Senkung der Brustkorbelemente 5 sowie der Bauchplatte 14 zuzulassen.

Weiters ist in Fig.12 ein Stethoskopsimulator 41 gezeigt, wobei die Thoraxnachbildung 2 und die Abdomennachbildung 13 drei Abstandssensoren 43, 44, 45 aufweisen, die mit einem Stethoskopkopf 46 des Stethoskopsimulators 41 zur Ermittlung des Abstands zwischen dem Stethoskopkopf 46 und dem jeweiligen Abstandssensor 43, 44, 45 zusammenwirken, um abstandsproportionale Signale zu erhalten. Die Steuereinheit 48 umfasst einen Speicher für Audiodateien und eine Verarbeitungseinrichtung zum Abmischen der Audiodateien in Abhängigkeit von den Abstandsdaten zu einem abgemischten Audiosignal, das den Ohrhörern 47 des Stethoskopsimulators 41 zugeführt wird.

In Fig. 13 ist ein Schaltbild schematisch dargestellt, wobei ersichtlich ist, dass die Abstandssensoren 43, 44, 45 (in Fig. 13 nicht dargestellt) des Patientensimulators 1 als Nahfeldsender mit einem Senderschwingkreis 49 ausgeführt sind und der Stethoskopkopf 46 einen resonanten Empfängerschwingkreis 50 aufweist. Die Nahfeldsender des Patientensimulators 1 erzeugen dabei ein elektromagnetisches Nahfeld mit einer vorgegebenen Frequenz, wobei die Trägerfrequenz beispielsweise mit 100kHz definiert wird. Die Senderschwingkreise 49 sind auf diese Trägerfrequenz abgestimmt, wobei sich die Resonanzfrequenz und die Amplitude in Abhängigkeit von der Entfernung zum Empfängerschwingkreis 50 verändern. Die Resonanzfrequenz und die Amplitude der beiden Senderschwingkreise 49 werden in einer Auswerteeinrichtung 51 ausgewertet und als den jeweiligen Abstand zum Stethoskopkopf 46 repräsentierende Abstandsdaten drahtlos an eine zentrale externe Steuereinrichtung 48, wie z.B. einen Steuerrechner übermittelt. In der Steuereinrichtung 48 werden die Abstandsdaten von dem Empfangsmodul 52 empfangen. Die Abstandsdaten können unmittelbar dem Audiogenerator 42 zugeführt werden oder zuerst, z.B. durch Triangulationsverfahren, in Positionsdaten umgerechnet werden. Im Audiogenerator sorgt eine Verarbeitungseinrichtung dafür, dass gespeicherte Audiodateien 53 in Abhängigkeit von den Abstands- oder Positionsdaten zu einem gemeinsamen Audiosignal abgemischt werden. Das Audiosignal wird drahtlos an ein Empfängermodul 54 des Stethoskopsimulators 41 übermittelt und dort in einem Verstärker 55 verstärkt und den Ohrhörern 47 zugeführt. Der Stethoskopsimulator 41 umfasst weiters eine nicht dargestellte Energieversorgung, welche nicht nur das Empfängermodul 54 und den Verstärker 55, sondern über die Leitungen 56 auch den Empfängerschwingkreis 50 speist.

In Fig. 14 ist die Steuerung des Lungensimulators sowie die davon getrennte Ansteuerung des Hub- und Senkmechanismus der Brustkorbnachbildung näher dargestellt.

Der Lungensimulator 3 umfasst einen starrwandigen, vorzugsweise metallischen Zylinder 57, in dem ein Kolben 58 mit Hilfe eines Antriebs 59 (z.B. Schrittmotor) in axialer Richtung verstellbar angeordnet ist. An Stelle eines Schrittmotors kann der Antrieb des Kolbens 58 auch mittels eines Linearmotors erfolgen, der vorzugsweise auf Basis eines elektromagnetischen Feldes funktioniert, z.B. mittels eines magnetischen Linearantriebs. Der Kolben 58 begrenzt ein Arbeitsvolumen bzw. eine Kavität 60 des Lungensimulators 3, in welche eine Luftröhrennachbildung 4 mündet, in welche der Tubus 67 eines Beatmungsgerätes (nicht dargestellt) eingeführt werden kann. Am Übergang von der Luftröhrennachbildung 4 in die Kavität 60 ist eine Engstelle 61 vorgesehen, durch welche der Strömungsquerschnitt der Luft in der Luftröhrennachbildung 4 eine Verengung erfährt. Es sind weiter Drucksensoren 62 und 63 mit Überdruckventil (nicht dargestellt) zur Begrenzung des maximal zulässigen Drucks vorgesehen, die zur Messung des Drucks in der Kavität 60 sowie in der Luftröhrennachbildung 4 angeordnet sind.

Zur Nachbildung der einzelnen Lungenfunktionen ist eine computerunterstützte Steuereinrichtung 64, insbesondere eine Recheneinrichtung, vorgesehen, die mit einem physiologischen Rechenmodell 65 zusammenwirkt, mit welchem physiologische Zusammenhänge der simulierten Parameter des Lungensimulators simuliert werden können. Der Steuervorrichtung 64 sind die Signale der Drucksensoren 62 und 63 sowie die Signale eines Sensors 66 zur Erfassung der aktuellen Position des Kolbens 58 zugeführt. Die Steuervorrichtung 64 erzeugt Steuerbefehle für den Kolbenantrieb 59 zur geregelten Ansteuerung und Bewegung des Kolbens 58, wobei sich durch den Einsatz eines schnellen Regelsystems und auf Grund der starren Ausführung der kavitätsbegrenzenden Wände das Verhalten einer bei herkömmlichen Lungensimulatoren vorgesehenen flexiblen Membran nachstellen lässt.

Um einer angeschlossenen Beatmungsmaschine einen Patienten vorzutäuschen, ist es ausreichend, das Tidalvolumen des beatmeten Patienten zu simulieren, welches nur einen geringen Anteil der Gesamtkapazität der Lunge darstellt. Die Kavität 60 des Lungensimulators ist daher so bemessen, dass sie in der maximalen Kolbenstellung dem Tidalvolumen, zuzüglich einer Volumenreserve für die Regelung, eines menschlichen Patienten, insbesondere eines Frühgeborenen, Neugeborenen oder Kindes entspricht.

Um einem Beatmungsgerät eine Lunge zu simulieren, muss der Volumen- und Druckverlauf über die Zeit sich im Bereich physiologischer bzw. pathologischer Parameter bewegen. Damit ist sichergestellt, dass die Verwendung von Beatmungsgeräten (maschinelle und manuelle) in Kombination mit der integrierten Lungennachbildung zur Anzeige von realistischen Beatmungsparametern führt und eine Einstellung von realistischen Beatmungsdrücken und - volumina an Beatmungsgeräten erlaubt. Dies führt damit ebenfalls zur realistischen Auslösung von Druck- und Volumenalarmen am Beatmungsgerät.

Zur Simulation des Atemzugvolumens des Patientensimulators wird das Volumen der Kavität 60 bei der Einatmungssimulation durch entsprechendes Bewegen des Kolbens 58 vergrößert und bei der Ausatmungssimulation verringert.

Für die Simulation der Compliance wird sowohl der aktuelle Druck in der Kavität 60 als auch das aktuelle Volumen der Kavität 60 ermittelt. Die Compliance ist hierbei definiert als die Volumenerhöhung $\Delta V$ je Erhöhung des applizierten Gasdruckes $\Delta p$, wobei die Abhängigkeit der Volumenerhöhung $\Delta V$ von der Druckerhöhung $\Delta p$ nicht-linear ist, d.h. das Verhältnis $\Delta V/\Delta p$ wird gegen Ende der Einatmung kleiner (selbst eine kleine Volumenzunahme erzeugt einen großen Druckanstieg). Der Druck p wird mit Hilfe des Drucksensors 62 gemessen. Das Volumen V ergibt sich aus dem bekannten Querschnitt des Zylinders 57 und der mit dem Sensor 66 gemessenen Kolbenposition. Verändert sich der Druck anders als es die Kolbenposition (direkt proportional zum Volumen) vorgibt, kann mit Hilfe des elektromechanischen Antriebs 59 die Kolbenposition nachgeführt werden. Die zeitliche Auflösung der Regelung muss hierfür so hoch wie möglich gewählt werden, damit keine Quantisierungsstufen erkennbar sind. Im gewählten Aufbau kann zusätzlich durch einen zweiten Drucksensor im Arbeitsvolumen in Verbindung mit einer Engstelle am Kolbenauslass ein Volumenstromsensor realisiert werden, der zur Verfeinerung der Abbildung genutzt werden kann.

Aus Sicht des Beatmungsgerätes ist nur der Druck am Ende des Tubus relevant. Dieser Umstand kann genutzt werden, um die Resistance durch die dynamische Komponente des Regelkreises zu simulieren. Diese fügt zusätzlich eine zeitliche Komponente in das System ein. Bei erhöhtem Strömungswiderstand in den Atemwegen verzögert sich die Füllung der Lunge bzw. wird derart erschwert, dass kein Gasaustausch in der vorgesehenen Zeit möglich ist.

$$R = \frac{\Delta p}{\dot{V}} \qquad \dot{V} = \frac{\Delta V}{t}$$

Bei einer erhöhten Resistance kommt es zu einem Rückstau der Atemgase im Tubus, der Druck steigt, der Volumenstrom sinkt. Niedrige Resistance R in der Lunge erzeugt einen geringen Gegendruck p im Tubus, der Volumenstrom $\dot{V}$ wird maximal.

Um diesen Effekt mit nur einem einzelnen Kolben 58 zu simulieren, ist es notwendig, den Druck in der Kavität 60 dem Druck im Tubus 67 anzupassen. Bei niedriger Resistance wird der Druck in der Kavität 60 niedriger bzw. gleich dem Druck im Tubus 67 gehalten, um das Einströmen der Gase zu erleichtern. Bei erhöhter Resistance wird in der Kavität 60 ein erhöhter Gegendruck erzeugt, welcher das Einströmen der Atemgase behindert. Die Reduzierung bzw. Erhöhung des Gegendrucks wird dabei durch die Verstellung des Kolbens 58 bewerkstelligt. Bei der Ansteuerung der Kolbenstellung werden insgesamt somit zwei Einflussgrößen berücksichtigt. Einerseits die sich aus der Compliance ergebende Kolbenposition in Abhängigkeit vom Druck in der Kavität 60, andererseits die sich aus der Resistance ergebende Einstellung eines Gegendrucks.

Durch die Erfassung der Drücke in der Kavität 60, als auch im Tubus 67 und anhand des bekannten Durchmessers der Engstelle kann zusätzlich auf den aktuellen Volumenstrom rückgeschlossen werden.

Die optionale, auf den Kolben wirkende Feder 75 stellt eine sog. Grundcompliance zur Verfügung, d.h. die Feder 75 bedingt ein passives Halten des Drucks in der Kavität 60 des Lungensimulators.

Eine andere Sichtweise stellt die Auswertung des Volumenstromes dar, da durch die beiden Drucksensoren mit der Engstelle ein Volumenstromsensor gebildet wird, der den Volumenstrom direkt misst.

In der Steuereinrichtung 64 liegen auf Grund der Messwerte der Drucksensoren 62 und 63 sowie auf Grund der durch den Sensor 66 ermittelten Kolbenstellung das Volumen der Kavität 60, der Volumenstrom in bzw. aus der Kavität 60 sowie der Druck in der Kavität 60 vor. Mit dem physiologischen Rechenmodell 65 können daraus Informationen betreffend die Compliance und die Resistance errechnet werden bzw. umgekehrt können aus einem vorgegebenen Compliancewert und einem vorgegebenen Resistancewert entsprechende Werte für den Druck, den Volumenstrom und das Volumen errechnet werden.

Das physiologische Rechenmodel ist ausgebildet, um aus den Werten für Compliance, Resistance und Atempathologien (z.B. Schaukelatmung) das aktuelle Füllvolumen zu definieren und weiters gesondert die Positionsdaten für die momentane Position der Brustkorbnachbildung und der Bauchplatte zu generieren, die der Animationssteuerung 68 geführt werden. In der Animationssteuerung 68 werden daraus Steuersignale für die mit der Brustkorbnachbildung zusammenwirkende Hub- und Senkmechanik 69 und für die mit der Bauchplatte zusammenwirkende Hub- und Senkmechanik 70 generiert, sodass die Simulation der Atembewegungen synchron mit und entsprechend dem Simulationszustand des Lungensimulator 3 erfolgt.

In Fig. 15 ist eine Gesamtübersicht eines Simulationssystems umfassend den Patientensimulator 1 und die Steuer- und Überwachungskomponenten dargestellt. Der Patientensimulator 1 stellt eine Nachbildung des gesamten Körpers eines Früh-, Neugeborenen oder Kindes dar. Das System umfasst weiters einen Server 71, ein graphisches Benutzerinterface 72, einen Patientenmonitor 73 und einen Simulationsrechner 74.

Der Simulationsrechner 74 ist für die Kommunikation des Patientensimulators 1 mit dem graphischen Benutzerinterface 72 und dem Patientenmonitor 73 verantwortlich und ist vorzugsweise in den Patientensimulator 1 integriert. Der Simulationsrechner 74 übernimmt dabei die rechenintensive Aufbereitung der Steuerbefehle und Sensordatenerfassung. Dabei kommuniziert der Simulationsrechner 74 mit den im Simulator 1 verbauten Komponenten und sammelt diverse Sensordaten des Simulators 1, verarbeitet diese und generiert in weiterer Folge Steuersignale, mit denen z.B. die Servomotoren des Simulators 1 kontrolliert werden.

Der Simulationsrechner 74 umfasst in Bezug auf den Lungensimulator (Fig. 14) das physiologischen Rechenmodell 65 und die Animationssteuerung 68.

Die Steuerung des gesamten Simulationssystems durch einen Trainer erfolgt über das graphische Benutzerinterface 72. Diese Benutzeroberfläche ermöglicht dem Trainer die Eingabe der Rahmenbedingungen für das Trainingsszenario. Im Verlauf der Übung werden hier die gewünschten pathologischen Veränderungen gesteuert und die vom Übungsteilnehmer durchgeführten Maßnahmen können durch eine Visualisierung der Sensordaten des Systems dem Trainer auf der Benutzeroberfläche sichtbar gemacht werden. Dazu werden die Parameter und die einzelnen Funktionen des Simulators 1, wie Atmung und Herzschlag, zunächst an den Simulationsrechner 74 übergeben und dort die entsprechenden Steuerbefehle für den Patientensimulator 1 generiert.

Die Benutzeroberfläche ist vorzugsweise in drei Bereiche aufgeteilt: 1.) die Darstellung des Neu- bzw. Frühgeborenen, mit den Steuerelementen für z.B. EKG, Sättigungsmonitoring und periphere Zugänge, 2.) der Bereich für die Steuerung der Atemfunktionen und 3.) der Bereich zur Abbildung und Steuerung des Patientenmonitors 73. Im Zentrum der Benutzeroberfläche stehen das 3D-Modell der Lunge und das 3D-Modell des Simulators jeweils im aktuellen Simulationszustand. Die Steuerelemente ermöglichen die "Fernsteuerung" des Simulationssystems über die Zwischenschicht des Simulationsrechners 74. Der Simulationsrechner 74 bestimmt kontinuierlich den aktuellen Zustand, in dem sich der Simulator 1 gerade befindet und überträgt diesen an das graphische Benutzerinterface 72, das diesen Zustand exakt auf der Oberfläche wiedergibt. Dies ermöglicht z.B. eine Live-Darstellung von Maßnahmen, die von den Trainingsteilnehmern vorgenommen werden, z.B. Herzdruckmassagen.

Für die Darstellung der simulierten Vitalwerte des simulierten Patienten umfasst das System einen Patientenmonitor 73. An den Patientenmonitor 73 werden die einstellbaren und die gemessenen Vitalparameter, die in Echtzeit am graphischen Benutzerinterface 72 dargestellt werden, von dieser vorzugsweise kabellos, wie z.B. über WLAN übertragen. Damit werden die physiologischen Daten des simulierten Patienten für die Trainingsteilnehmer visualisiert. Die realistische Darstellung dieser Werte ist für die Entscheidungsfindung und das Einleiten der entsprechenden Maßnahmen für die Trainierenden von entscheidender Bedeutung. Für die Bedienung des Monitors, wie z.B. das Quittieren von Alarmen, verfügt dieser über einen Touchscreen.

Der optionale Server 71 dient der Verwaltung und Kommunikation von Daten, die den Patientenmonitor 73 betreffen und nicht im Modell des Simulators 1 abgebildet sind.

Fig. 16 und Fig. 17 zeigen eine Seitenansicht und eine Vorderansicht des Simulators mit Mitteln zur Simulation der atemsynchronen Kopfbewegung. Fig. 16 entspricht im Wesentlichen der Ausbildung gemäß Fig. 3, wobei zusätzlich zwei Bowdenzüge 76 vorgesehen sind, die zu beiden Seiten der Atemwegsnachbildung (Luftröhrennachbildung 4) verlaufen. Die Bowdenzüge 76 sind einerseits stabil an zwei Hebeln 77 der Schädelnachbildung 6, insbesondere am hinteren Gaumendach, angebracht und sind andererseits mit dem caudalen Ende der beiden Rippenschwingen 79, den Hebelarmen der Thoraxhälften, jeweils über einen steuerbaren Klemmmechanismus 78, verbunden. Wenn der Klemmmechanismus 78 aktiviert ist, wird eine zugfeste Verbindung zwischen dem Seil des jeweiligen Bowdenzuges 76 und der Rippenschwinge 79 hergestellt, sodass das Anheben der Rippenschwinge 79 einen entsprechenden Zug auf das Seils bewirkt. Der Klemmmechanismus 78 ermöglicht die Fixierung des jeweiligen Bowdenzuges 76 bei maximaler Exspiration (Rippenschwinge 79 gesenkt). Durch das Anheben der Rippenschwinge 79 bei der Inspiration wird ein Zug auf das Seil des Bowdenzugs ausgeübt, der damit ein nach vorne Neigen des Kopfes 6 synchron zur Brusthebung induziert. Die Gegenbewegung erfolgt durch die Rückstellkraft der gespannten Silikonkomponenten (z.B. Silikonhaut im Nackenbereich und Silikonkomponenten des Atemweges) des Simulators. Diese Elemente wirken wie Gegenfedern.

Auf Grund der getrennten Ansteuermöglichkeit der beiden Klemmmechanismen 78 ist sowohl ein Vorbeugen bei Aktivierung beider Klemmen 78, als auch ein seitliches Beugen bei Aktivieren von nur einer Klemme 78 möglich.

Ein weiterer Aspekt ist der Zeitpunkt der Klemmung während des Anhebens der Rippenschwinge 79, da damit die Stärke der Kopfbewegung beeinflusst werden kann. Wenn der Klemmmechanismus 78 nicht in der Stellung der maximalen Exspiration aktiviert wird, sondern erst nachdem die Rippenschwinge 79 einen ersten Teilweg zurückgelegt hat, wird die Kopfneigung in einem geringeren Ausmaß vorgenommen. Durch diese Variationsmöglichkeiten ist es möglich die Kopfbewegung nach einem Zufallsprinzip variabel zu gestalten, sodass die Bewegung einer natürlicheren Bewegung entspricht.

**Patentansprüche**

1. Patientensimulator, insbesondere Frühgeborenen-, Neugeborenen- oder Kindersimulator, umfassend eine Thoraxnachbildung, einen Lungensimulator und eine zum Lungensimulator führende anatomische Luftröhrennachbildung, wobei die Thoraxnachbildung eine Brustkorbnachbildung mit wenigstens einem heb- und senkbaren Brustkorbelement zur Simulation einer Brustkorbhebung und -senkung aufweist, **dadurch gekennzeichnet, dass** das wenigstens eine heb- und senkbare Brustkorbelement mit einer vom Lungensimulator unabhängig ansteuerbaren Hub- und Senkmechanik zusammenwirkt und das heb- und senkbare Brustkorbelement von einer vom Lungensimulator mechanisch unabhängigen Hub- und Senkmechanik angetrieben ist, sodass die Brustkorbhebung und -senkung unabhängig vom momentanen Zustand des Lungensimulators simulierbar ist, wobei der Antrieb des heb- und senkbaren Brustkorbelements bevorzugt als pneumatischer, hydraulischer oder elektrischer Antrieb ausgebildet ist.

2. Patientensimulator nach Anspruch 1, **dadurch gekennzeichnet, dass** wenigstens ein Sensor zur Messung des Zustands des Lungensimulators, insbesondere wenigstens ein Drucksensor zur Messung des Drucks in wenigstens einer Kavität des Lungensimulators, vorgesehen ist, dessen Signale einer Steuereinrichtung zur Ansteuerung des Antriebs der Hub- und Senkmechanik der Thoraxnachbildung zugeführt sind, um das wenigstens eine heb- und senkbare Brustkorbelement in Abhängigkeit von den Signalen anzuheben und abzusenken, wobei der Drucksensor bevorzugt angeordnet und ausgebildet ist, um den Beatmungsdruck zu ermitteln.

3. Patientensimulator nach Anspruch 1 oder 2, **dadurch gekennzeichnet, dass** wenigstens ein rechtes heb- und senkbares Brustkorbelement für die rechte Brustkorbhälfte und wenigstens ein linkes heb- und senkbares Brustkorbelement für die linke Brustkorbhälfte vorgesehen sind, die gesondert voneinander heb- und senkbar ausgebildet sind und die jeweils mit einer eigenen ansteuerbaren Hub- und Senkmechanik zusammenwirken, wobei die Hub- und Senkmechanik für das rechte Brustkorbelement und die Hub- und Senkmechanik für das linke Brustkorbelement unabhängig voneinander ansteuerbar sind.

4. Patientensimulator nach Anspruch 1, 2 oder 3, **dadurch gekennzeichnet, dass** der Lungensimulator wenigstens ein Stellelement zur Einstellung der Compliance und/oder wenigstens ein Stellelement zur Einstellung der Resistance aufweist.

5. Patientensimulator nach einem der Ansprüche 1 bis 4, **dadurch gekennzeichnet, dass** die Hub- und Senkmechanik(en) in der Thoraxnachbildung, insbesondere unter dem wenigstens einen heb- und senkbaren Brustkorbelement, angeordnet ist bzw. sind.

6. Patientensimulator nach einem der Ansprüche 1 bis 5, **dadurch gekennzeichnet, dass** der Antrieb für die Hub- und Senkmechanik(en) jeweils eine elektromotorische Antriebseinheit aufweist, die bevorzugt einen zu Schwenkbewegungen antreibbaren Arm umfasst.

7. Patientensimulator nach einem der Ansprüche 1 bis 6, **dadurch gekennzeichnet, dass** in der Thoraxnachbildung, insbesondere in einer Atemwegsnachbildung, vorzugsweise in der Luftröhrennachbildung, ein Feuchtigkeitssensor vorgesehen ist, der das Einspritzen einer Flüssigkeit, wie z.B. eines Surfactant-Präparates, in die Atemwegsnachbildung und/oder die Lunge detektiert und mit dem Lungensimulator derart zusammenwirkt, dass die Werte von Compliance und/oder Resistance des Lungensimulators bei Detektieren einer Flüssigkeit geändert werden.

8. Patientensimulator nach Anspruch 7, **dadurch gekennzeichnet, dass** der Feuchtigkeitssensor an oder in einem flüssigkeitsadsorbierenden Material, insbesondere einem Schaummaterial angeordnet ist.

9. Patientensimulator nach einem der Ansprüche 1 bis 8, **dadurch gekennzeichnet, dass** das wenigstens eine heb- und senkbare Brustkorbelement eine Mehrzahl von Rippennachbildungen umfasst und die Thoraxnachbildung eine Hautnachbildung aufweist, welche die Rippennachbildungen überdeckt und gemeinsam mit dem wenigstens einen heb- und senkbaren Brustkorbelement heb- und senkbar ist, wobei am wenigstens einen heb- und senkbaren Brustkorbelement ein an der Hautnachbildung angreifendes Zug- oder Druckmittel, wie z.B. wenigstens ein Faden oder ein stabförmiges Zugelement, insbesondere ein elektromechanisches Zug- oder Druckmittel, befestigt ist und wobei das wenigstens eine heb- und senkbare Brustkorbelement ein Antriebselement, insbesondere einen Elektromotor, zum Verlagern des Zugmittels trägt, um eine interkostale Einziehung der Hautnachbildung zu bewirken.

10. Patientensimulator nach einem der Ansprüche 1 bis 9, umfassend eine Abdomennachbildung, die eine heb- und senkbare Bauchplatte aufweist, die von einer Hub- und Senkmechanik angetrieben ist, wobei eine Steuervorrichtung dazu eingerichtet ist, die Bauchplatte anzuheben und gleichzeitig den Beatmungswiderstand des Lungenmodels zu erhöhen.

11. Patientensimulator nach Anspruch 10, **dadurch gekennzeichnet, dass** die Abdomennachbildung eine Lichtquelle zum Beleuchten einer Hautnachbildung im Bauchbereich von innen umfasst.

12. Patientensimulator nach einem der Ansprüche 1 bis 11, umfassend eine Kopfnachbildung, die mit einer Kippmechanik zu Änderung des Winkels zwischen Kopfnachbildung und Thoraxnachbildung zusammenwirkt, wobei eine Steuervorrichtung dazu eingerichtet ist, die Kippmechanik zu einer periodischen Kippbewegung der Kopfnachbildung anzutreiben, wobei die periodische Kippbewegung mit der Heb- und Senkbewegung des Brustkorbelements synchronisiert ist.

13. Patientensimulator nach einem der Ansprüche 1 bis 11 umfassend eine Kopfnachbildung, die mit einer Kippmechanik zur Änderung des Winkels zwischen Kopfnachbildung und Thoraxnachbildung zusammenwirkt, wobei eine Bedieneroberfläche und eine Monitordarstellung zur Vorgabe und Darstellung von patientenspezifischen Biosignalen und Atemparametern auf zwei, vorzugsweise drahtlos, gekoppelten Systemen umgesetzt ist.

**Claims**

1. A patient simulator, in particular a premature baby, newborn or child simulator, comprising a simulated thorax, a lung simulator and a simulated anatomical trachea leading to the lung simulator, wherein the simulated thorax comprises a simulated chest including at least one liftable and lowerable chest element to simulate lifting and lowering of the chest, **characterized in that** the at least one liftable and lowerable chest element cooperates with a lifting and lowering mechanism actuatable independently of the lung simulator and the liftable and lowerable chest element is driven by a lifting and lowering mechanism being mechanically independent of the lung simulator, such that the lifting and lowering of the chest can be simulated independently of the current status of the lung simulator, wherein the drive of the liftable and lowerable chest element is preferably configured as pneumatic, hydraulic or electric drive.

2. A patient simulator according to claim 1, **characterized in that** at least one sensor for measuring the state of the lung simulator, in particular at least one pressure sensor for measuring the pressure in at least one cavity of the lung simulator, is provided, whose signals are fed to a control device for actuating the drive of the lifting and lowering mechanism of the simulated thorax in order to lift and lower the at least one liftable and lowerable chest element as a function of said signals, said pressure sensor being preferably arranged and configured to detect the respiratory pressure.

3. A patient simulator according to claim 1 or 2, **characterized in that** at least one right liftable and lowerable chest element for the right hemithorax and at least one left liftable and lowerable chest element for the left hemithorax are provided, which are designed to be liftable and lowerable separately from each other and each cooperate with a separate, actuatable lifting and lowering mechanism, the lifting and lowering mechanism for the right chest element and the lifting and lowering mechanism for the left chest element being actuatable independently of each other.

4. A patient simulator according to claim 1, 2 or 3, **characterized in that** the lung simulator comprises at least one control element for adjusting the compliance and/or at least one control element for adjusting the resistance.

5. A patient simulator according to any one of claims 1 to 4, **characterized in that** the lifting and lowering mechanism(s) is/are disposed in the simulated thorax, in particular below the at least one liftable and lowerable chest element.

6. A patient simulator according to any one of claims 1 to 5, **characterized in that** the drive for the lifting and lowering mechanism(s) each comprises an electromotor drive unit preferably including an arm drivable for pivotal movement.

7. A patient simulator according to any one of claims 1 to 6, **characterized in that** a humidity sensor is provided in the simulated thorax, in particular in a simulated respiratory tract, preferably in the simulated trachea, which detects the injection of a fluid such as a surfactant preparation into the simulated respiratory tract and/or the lungs and which cooperates with the lung simulator in such a manner as to change the compliance and/or resistance values of the lung simulator upon detection of a fluid.

8. A patient simulator according to claim 7, **characterized in that** the humidity sensor is disposed on or in a fluid-adsorbing material, in particular a foamed material.

9. A patient simulator according to any one of claims 1 to 8, **characterized in that** the at least one liftable and lowerable chest element comprises a plurality of simulated ribs, and the simulated thorax comprises a simulated skin covering the simulated ribs and being liftable and lowerable together with the at least one liftable and lowerable chest element, wherein a tension or pressure means such as at least one thread or a rod-shaped tension element, in particular an electromechanical tension or pressure means, contacting the simulated skin is fastened to the at least one liftable and lowerable chest element, and wherein the at least one liftable and lowerable chest element carries a drive element, in particular an electromotor, for shifting the tension means so as to cause an intercostal retraction of the simulated skin.

10. A patient simulator according to any one of claims 1 to 9, comprising a simulated abdomen including a liftable and lowerable abdominal plate driven by a lifting and lowering mechanism, wherein a control device is arranged to lift the abdominal plate while, and at the same time, increase the respiratory resistance of the lung model.

11. A patient simulator according to claim 10, **characterized in that** the simulated abdomen comprises a light source for illuminating a simulated skin in the stomach region from inside.

12. A patient simulator according to any one of claims 1 to 11, comprising a simulated head cooperating with a tilting mechanism for changing the angle between the simulated head and the simulated thorax, wherein a control device is arranged to drive the tilting mechanism for periodic tilting movements of the simulated head, said period tilting movements being synchronized with the lifting and lowering movements of the chest element.

13. A patient simulator according to any one of claims 1 to 11, comprising a simulated head cooperating with a tilting mechanism for changing the angle between the simulated head and the simulated thorax, wherein a user interface and a monitor display for setting and displaying patient-specific biosignals and respiratory parameters are implemented on two, preferably wirelessly coupled systems.

## Revendications

1. Simulateur de patient, notamment un simulateur de prématuré, de nouveau-né ou d'enfant, comportant une reproduction thoracique, un simulateur pulmonaire et une reproduction trachéale anatomique menant au simulateur pulmonaire, la reproduction thoracique présentant une reproduction de la cage thoracique comprenant au moins un élément de cage thoracique pouvant être soulevé et abaissé pour simuler un soulèvement et un abaissement de la cage thoracique, **caractérisé en ce que** l'au moins un élément de cage thoracique pouvant être soulevé et abaissé interagit avec un mécanisme de soulèvement et d'abaissement pouvant être commandé indépendamment du simulateur pulmonaire, et **que** l'élément de cage thoracique pouvant être soulevé et abaissé est actionné par un mécanisme de soulèvement et d'abaissement qui est mécaniquement indépendant du simulateur pulmonaire, de sorte que le soulèvement et l'abaissement de la cage thoracique peuvent être simulés indépendamment de l'état actuel du simulateur pulmonaire, dans lequel l'entraînement de l'élément de cage thoracique pouvant être soulevé et abaissé est de préférence conçu comme un entraînement pneumatique, hydraulique ou électrique.

2. Simulateur de patient selon la revendication 1, **caractérisé en ce qu'**au moins un capteur est prévu pour mesurer l'état du simulateur pulmonaire, notamment au moins un capteur de pression pour mesurer la pression dans au moins une cavité du simulateur pulmonaire, dont les signaux sont envoyés à un dispositif de commande pour commander l'entraînement du mécanisme de soulèvement et d'abaissement de la reproduction thoracique, afin de soulever et abaisser l'au moins un élément de cage thoracique pouvant être soulevé et abaissé en fonction des signaux, dans lequel le capteur de pression est de préférence agencé et conçu pour déterminer la pression de ventilation.

3. Simulateur de patient selon la revendication 1 ou 2, **caractérisé en ce qu'**il est prévu au moins un élément de cage thoracique pouvant être soulevé et abaissé de droite pour la moitié droite de la cage thoracique, et au moins un élément de cage thoracique pouvant être soulevé et abaissé de gauche pour la moitié gauche de la cage thoracique, qui sont conçus pour être soulevés et abaissés séparément l'un de l'autre, et dont chacun coopère avec son propre mécanisme contrôlable de soulèvement et d'abaissement, dans lequel le mécanisme de soulèvement et d'abaissement pour l'élément de cage thoracique de droite et le mécanisme de soulèvement et d'abaissement pour l'élément de cage thoracique de gauche sont contrôlables indépendamment l'un de l'autre.

4. Simulateur de patient selon la revendication 1, 2 ou 3, **caractérisé en ce que** le simulateur pulmonaire comprend au moins un élément de réglage pour régler la compliance et/ou au moins un élément de réglage pour régler la résistance.

5. Simulateur de patient selon l'une des revendications 1 à 4, **caractérisé en ce que** le(s) mécanisme(s) de soulèvement et d'abaissement est ou sont disposés dans la reproduction thoracique, notamment en dessous de l'au moins un élément de cage thoracique pouvant être soulevé et abaissé.

6. Simulateur de patient selon l'une des revendications 1 à 5, **caractérisé en ce que** chacun des entraînements pour le(s) mécanisme(s) de soulèvement et d'abaissement comporte une unité d'entraînement électromotrice, comportant de préférence un bras qui peut être entraîné pour pivoter.

7. Simulateur de patient selon l'une des revendications 1 à 6, **caractérisé en ce qu'**un capteur d'humidité est prévu dans la reproduction thoracique, notamment dans une reproduction des voies respiratoires, de préférence dans la reproduction trachéale, qui détecte l'injection d'un liquide, tel qu'une préparation de surfactant, dans la reproduction des voies respiratoires et/ou les poumons, et qui interagit avec le simulateur pulmonaire, de telle façon que les valeurs de compliance et/ou de résistance du simulateur pulmonaire sont modifiés lors de la détection d'un liquide.

8. Simulateur de patient selon la revendication 7, **caractérisé en ce que** le capteur d'humidité est disposé sur ou dans un matériau absorbant les liquides, notamment un matériau en mousse.

9. Simulateur de patient selon l'une des revendications 1 à 8, **caractérisé en ce que** l'au moins un élément de cage thoracique pouvant être soulevé et abaissé comprend une pluralité de reproductions de côtes, et **que** la reproduction thoracique comprend une reproduction de peau, qui recouvre les reproductions de côtes et qui peut être relevé et abaissé avec l'au moins un élément de cage thoracique pouvant être soulevé et abaissé, dans lequel un moyen de traction ou de poussée agissant sur la reproduction de peau, tel qu'au moins un fil ou un élément de tension en forme de tige, notamment un moyen de traction ou de poussée électromécanique, est attaché à l'au moins un élément de cage thoracique pouvant être soulevé et abaissé, et dans lequel l'au moins un élément de cage thoracique pouvant être soulevé et abaissé porte un élément d'entraînement, notamment un moteur électrique, pour déplacer le moyen de traction, pour effectuer une rétraction intercostale de la reproduction de peau.

10. Simulateur de patient selon l'une des revendications 1 à 9, comportant une reproduction abdominale, qui présente une plaque ventrale pouvant être soulevé et abaissé, actionné par un mécanisme de soulèvement et d'abaissement, dans lequel un dispositif de contrôle est configuré pour soulever la plaque ventrale et pour augmenter en même temps la résistance à la ventilation du modèle pulmonaire.

11. Simulateur de patient selon la revendication 10, **caractérisé en ce que** la reproduction abdominale comprend une source lumineuse pour éclairer de l'intérieur une reproduction de peau dans la région abdominale.

12. Simulateur de patient selon l'une des revendications 1 à 11, comportant une reproduction de tête, qui interagit avec un mécanisme d'inclinaison pour modifier l'angle entre la reproduction de tête et la reproduction thoracique, dans lequel un dispositif de contrôle est agencé pour entrainer le mécanisme d'inclinaison à un mouvement d'inclinaison périodique de la reproduction de tête, dans lequel le mouvement d'inclinaison périodique est synchronisé avec le mouvement de soulèvement et d'abaissement de l'élément de cage thoracique.

13. Simulateur de patient selon l'une des revendications 1 à 11 comportant une reproduction de tête, qui interagit avec un mécanisme d'inclinaison pour modifier l'angle entre la reproduction de tête et la reproduction thoracique, dans lequel une interface utilisateur et un écran d'affichage pour la spécification et l'affichage des signaux biologiques et des paramètres respiratoires spécifiques au patient sont implémentés sur deux systèmes couplés, de préférence couplés sans fil.

Fig. 1

Fig. 2

Fig. 3

EP 3 482 386 B1

Fig. 4

Fig. 5

Fig. 6

Fig. 7

Fig. 8

Fig. 9

Fig. 10

Fig. 11

Fig. 12

Fig. 13

EP 3 482 386 B1

Fig. 14

Fig. 15

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016030393 A
- US 4850876 A
- US 5584701 A
- WO 2012155283 A1